# EUROPEAN PATENT APPLICATION

(11) **EP 3 805 326 A1**
(43) Date of publication of application: **14.04.2021**
(21) Application number: 19816104.4
(22) Date of filing: 05.06.2019
(51) Int. Cl.: C09D 129/04, B32B 27/20, B65D 23/08, C09D 7/20, C09D 7/61

(54) **COATING AGENT FOR FORMING COATING FILM THAT HAS BARRIER PROPERTIES AND STRETCHABILITY, AND USE OF SAME**

(30) Priority: 06.06.2018 JP 2018108842
(71) Applicant: Suntory Holdings Limited, Osaka 530-8203 (JP); National University Corporation Kobe University, Kobe-shi, Hyogo 657-8501 (JP)
(72) Inventor: NISHIYAMA, Masanori, Tokyo 135-8631 (JP); TOMARI, Ichiro, Tokyo 135-8631 (JP); YAMANE, Ryo, Kawasaki-shi, Kanagawa 211-0067 (JP); SUZUKI, Hideyuki, Tokyo 135-8631 (JP); KURAOKA, Koji, Kobe-shi, Hyogo 657-8501 (JP)
(74) Representative: Mewburn Ellis LLP
(86) International application number: PCT/JP2019/022410
(87) International publication number: WO 2019/235541

(57) **Abstract**

The object of the present invention is to provide a coating agent for forming a coating film having barrier properties and stretchability, and to provide a resin container comprising a coating film formed using the coating agent on a surface thereof, wherein the coating film has high barrier properties and is less prone to film breakage during stretching.

LDH, which is in the form of nanometer-scale particles, is added along with PVA.

## Description

### FIELD

The present invention relates to a coating agent for forming a coating film having barrier properties and stretchability, comprising polyvinyl alcohol (hereinafter abbreviated as PVA) and a layered double hydroxide (hereinafter abbreviated as LDH), and use thereof.

### BACKGROUND

Currently, resin containers for beverages and foods (hereinafter referred to as beverages, etc.), and in particular, polyethylene terephthalate plastic containers (hereinafter also referred to as PET bottles), are widely used.

It is publicly known that a barrier coating is applied to the surface of such a resin container to reduce the permeation of gas, particularly oxygen and carbon dioxide, into and out of the container, thereby improving the shelf life of beverages, etc., inside the container.

For example, Patent Literature 1 below discloses that the barrier properties of a resin container can be improved by the application of a coating agent comprising PVA as the primary component.

However, in order to obtain the desired barrier properties using PVA as a coating barrier material, it is necessary to increase the application amount of the PVA, and an increase in the application amount of PVA brings about disadvantages such as a reduction in productivity due to extension of drying time, the generation of bubbles in the drying process, and poor drying. Though the application amount of PVA can be reduced by adding inorganic particles having barrier properties, in this case, there arises a problem wherein the coating film formed by the coating agent comprising the inorganic particles cannot withstand stretching and is prone to film breakage.

### CITATION LIST

### Patent Literature

[PTL 1] Japanese Unexamined Patent Publication (Kokai) No. 2005-306410
[PTL 2] Japanese Patent No. 5022038
[PTL 3] Japanese Unexamined Patent Publication (Kokai) No. 2017-65149
[PTL 4] Japanese Unexamined Patent Publication (Kokai) No. 2017-64640

### Non-Patent Literature

[NPL 1] Clay Science, Vol. 46, No.4, pp. 207-218 (2007)

### SUMMARY

### Technical Problem

The object of the present invention is to provide a coating agent for forming a coating film having barrier properties and stretchability, and to provide a resin container comprising a coating film formed using the coating agent on a surface thereof, wherein the coating film has high barrier properties and is less prone to film breakage during stretching.

### Solution to the Problem

As a result of rigorous investigation and experimentation in order to achieve such an object, the present inventors have discovered that a coating film which has high barrier properties and which is less prone to film breakage during stretching can be formed by adding LDH, which is in the form of nanometer-scale particles, along with PVA, and have completed the present invention.

The present invention is as described below.
[1] A coating agent for forming a coating film having barrier properties and stretchability, comprising polyvinyl alcohol (PVA) and a layered double hydroxide (LDH).
[2] The coating agent according to 1, wherein approximately 3 wt% to approximately 7 wt% of LDH, with respect to the PVA, is contained in the coating agent.
[3] The coating agent according to 1 or 2, wherein the LDH is a magnesium acetate Mg-Al LDH.
[4] The coating agent according to any one of 1 to 3, wherein approximately 8 wt% to approximately 13 wt% of PVA, with respect to the total amount of the coating agent, is contained in the coating agent.
[5] The coating agent according to any one of 1 to 4, further comprising an alcohol.
[6] The coating agent according to 5, wherein the alcohol is isopropyl alcohol or ethanol.
[7] A resin container comprising a coating film in which there is formed a barrier layer comprising polyvinyl alcohol (PVA) and a layered double hydroxide (LDH).
[8] The resin container according to 7, wherein approximately 3 wt% to approximately 7 wt% of LDH, with respect to the PVA, is contained in the barrier layer.
[9] The resin container according to 7 or 8, wherein the LDH is a magnesium acetate Mg-Al LDH.
[10] The resin container according to any one of 7 to 9, wherein approximately 8 wt% to approximately 13 wt% of PVA, with respect to the total amount of a coating agent, is contained in the barrier film.
[11] The resin container according to any one of 7 to 10, further comprising an alcohol in the barrier layer.
[12] The resin container according to 11, wherein the alcohol is isopropyl alcohol or ethanol.
[13] The resin container according to any one of 7 to 12, wherein the resin container is a plastic bottle.
[14] A preform for a plastic bottle consisting of a mouth serving as an opening of the plastic bottle, a cylindrical body, and a bottom enclosing the cylindrical body, wherein the preform comprises a coating film in which there is formed a barrier layer container polyvinyl alcohol (PVA) and a layered double hydroxide (LDH).
[15] The preform according to 14, wherein approximately 3 wt% to approximately 7 wt% of LDH, with respect to the PVA, is contained in the barrier layer.
[16] The preform according to 14 or 15, wherein the LDH is a magnesium acetate Mg-Al LDH.
[17] The preform according to any one of 14 to 16, wherein approximately 8 wt% to approximately 13 wt% of PVA, with respect to the total amount of a coating agent, is contained in the barrier film.
[18] The preform according to any one of 14 to 17, further comprising an alcohol in the barrier layer.
[19] The preform according to 18, wherein the alcohol is isopropyl alcohol or ethanol.
[20] A method for the production of a preform for a plastic bottle, comprising the steps of:
   preparing a preform consisting of a mouth serving as an opening of the plastic bottle, a cylindrical body, and a bottom enclosing the cylindrical body, and
   coating an outer surface of the preform with the coating agent according to any one of 1 to 6 and drying to form a barrier layer.
[21] A method for the production of a plastic bottle, comprising blow-molding a preform for a plastic bottle produced by the method according to 20.

### Advantageous Effects of the Invention

According to the present invention, a coating agent for forming a coating film having barrier properties and stretchability and a resin container comprising a coating film formed on a surface thereof, wherein the coating film has high barrier properties and is less prone to film breakage during stretching, are formed. Since LDH has an extremely high aspect ratio, the barrier properties are high due to the labyrinth effect, and since the short side is on the order several nm, it is presumed that film breakage during stretching is unlikely to occur.

### BRIEF DESCRIPTION OF THE DRAWINGS

FIG. 1 shows graphs illustrating the oxygen permeability of PET bottles having a coating film formed using coating solutions comprising PVA and LDH at predetermined concentrations under predetermined temperature and humidity conditions.
FIG. 2 is a graph showing the change over time in viscosity of each coating solution (PVA 13% and LDH 5%; PVA 13%, LDH 5%, and IPA 5%; and PVA 13%, LDH 5%, and ethanol 5%).
FIG. 3 shows FIB-SIM images of cross-sections in the vicinity of a center of a bottle shape after blow-molding. The portions shown in white in the PVA + LDH layer represent the portions where LDH is dispersed (present).
FIG. 4 shows TEM images of cross-sections in the vicinity of a center of a bottle shape after blow-molding.

### DESCRIPTION OF EMBODIMENTS

One aspect of the present invention provides a coating agent for forming a coating film having barrier properties and stretchability, comprising PVA and LDH.

As used herein, the phrase "resin container" means a container made of a synthetic resin for storing beverages and food, and examples thereof include plastic bottles. Plastic bottles encompass bottles made of polyethylene terephthalate (PET), polypropylene (PP), and polyethylene (PE), and PET bottles are preferred.

PVA has the following chemical formula and is used to significantly reduce the gas permeability (particularly O₂ and CO₂) of a substrate, thereby improving the shelf life of the contained food or beverage such as soft drink or beer.

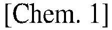

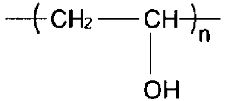

LDH is a double hydroxide in which trivalent metal ions are dissolved in a divalent metal hydroxide, and since the base hydroxide layers have a positive charge, it has a laminated structure with negatively charged anions interposed between the layers. LDH has the property of incorporating (intercalating) atoms, molecules, and ions (guest substances) into the layer space while retaining the two-dimensional base layers (host layers) by host-guest reaction, and thus, research is being conducted in various fields such as carbon dioxide adsorbents, ion exchangers, flame-retardant additives, drug carriers, and cement additives. LDH is classified as a type of clay mineral, and though the amount of LDH produced in nature is small, there are several types thereof. The most commonly used of these is hydrotalcite, which is represented by the composition formula Mg₆Al₂(OH)₁₆CO₃·4H₂O.

As disclosed in Patent Literature 1, LDH is represented by the following general formula, and the crystal structure thereof has a structure of an alternating laminate of a base layer, which is a regular octahedral hydroxide layer comprising trivalent metal ions replacing some divalent metal ions, and an intermediate layer consisting of interlayer anions and interstitial water.

[M²⁺₁₋ₓM³⁺ₓ(OH)_{2]}^{X+}[Aⁿ⁻_{x/n}·yH₂O]

In the formula, M²⁺ is a divalent metal ion of Mg, Mn, Fe, Co, Ni, Cu, or Zn, and M³⁺ is a trivalent metal ion of Al, Cr, Fe, Co, or In. The base hydroxide layers have a positive charge due to the substitution of some divalent metal ions with trivalent metal ions, and anions are incorporated into the intermediate layers to supplement the charge to maintain charge neutrality. Furthermore, water molecules are also incorporated between the layers as interstitial water. Aⁿ⁻, which is an anion in the intermediate layer, is Cl⁻, NO³⁻, CO₃²⁻, or COO , and can be exchanged depending on the type thereof. Furthermore, x = [M³⁺]/([M²⁺] + [M³⁺]), and conventionally, x = 0.2 to 0.33 and y is a real number greater than 0.

Though the LDH used in the present invention is not particularly limited, a magnesium acetate Mg-Al LDH in which Mg acetate is intercalated in the intermediate layer is preferred. Magnesium acetate Mg-Al LDH is disclosed in detail in Patent Literature 2, and specifically, is composed of base layers constituted by a metal double hydroxide of M(II)₁₋ₓM(III)ₓ(OH)₂ (where M(II) is Mg, M(III) is Al, and x = 0.2 to 0.33) and Mg acetate and interstitial water intercalated in the intermediate layers between the base layers. Such an LHD can be purchased from Tayca Corporation under the product name T-HT A610

(composition formula: Mg₆Al₂(OH)₁₈Mg(CH₃COO)₂·nH₂O).

Examples of solvents which can be used in the preparation of the coating agent according to the present invention include water, methanol, ethanol, IPA, MEK, acetone, ethylene glycol, triethylene glycol, glycerin, acetamide, dimethylamide, dimethyl acetamide, dimethyl sulfoxide, cyclohexanone, tetrahydrofuran, DMSO, pyridine and/or combinations thereof.

The concentration of the LDH in the coating agent according to the present invention, as a relative concentration with respect to the PVA, is typically approximately 3 wt% to approximately 7 wt%, and is preferably approximately 5 wt%. Furthermore, the concentration of PVA in the coating agent according to the present invention, as an absolute concentration with respect to the total amount of the coating agent, is typically approximately 8 wt% to approximately 13 wt%, and preferably approximately 10 wt%.

The coating agent according to the present invention may further contain alcohol. Since LDH has a viscosity-imparting effect, the viscosity of the coating agent comprising LDH may increase over time, but the increase in viscosity can be suppressed by adding an alcohol to the coating agent. The alcohol which can be used in the present invention is not particularly limited, and examples thereof include isopropyl alcohol, ethanol, and/or combinations thereof, and in particular, isopropyl alcohol is preferred. The concentration of the alcohol in the coating agent according to the present invention, as a relative concentration with respect to the solvent, is typically approximately 3 wt% to approximately 13 wt%, and preferably approximately 5 wt%.

Another aspect of the present invention provides a resin container or a preform for a plastic bottle, comprising a coating film in which there is formed a barrier layer comprising PVA and LDH. The preform for a plastic bottle is an intermediate product prior to blow-molding into a plastic bottle, and is composed of a mouth serving as the opening of the plastic bottle, a cylindrical body, and a bottom enclosing the cylindrical body. The resin container or preform for a plastic bottle according to the present invention is obtained by coating the surface of the resin container or preform with the coating agent according to the present invention described above and drying to form a barrier layer.

In the coating of the coating agent, in addition to methods which are known in the industry such as, for example, dipping (immersion) methods, blow methods, spray methods, coater methods, and transfer methods, a dispenser coating method in which a slot-die is used can be adopted.

Slot-die coating is disclosed in detail in Patent Literature 3 and 4, and is achieved by horizontally holding a resin container or preform, rotating the resin container or preform about an axis, and thereafter discharging the coating liquid in a planar manner from the slot of the dispenser toward the rotating resin container or preform. By using this type of coating method, variations in the film thickness of the coating formed on the resin container or perform can be reduced, and the generation of bubbles in the coating liquid to be applied onto the resin container or preform can be suppressed.

Prior to the above coating step, the surface of the resin container or preform is preferably treated by means of plasma, corona discharge, or electron beam. Due to such a pretreatment, adhesion of the coating agent to the substrate can be strengthened.

The drying means of the coating agent is not particularly limited and is preferably executed with a heater or blowing air (ambient temperature or hot air). In order to shorten the heating and drying time of the coating solution, it is effective to heat from the inside of the film by selecting a heat source having a heating wavelength suitable for the absorption wavelength of the solvent and the hydroxyl group. From this viewpoint, it is preferable to use a carbon heater which generates near-infrared to mid-infrared rays. Furthermore, in order to efficiently remove the evaporated water without cooling the film, a far-infrared heater, blowing air (ambient temperature), or hot air may be used in combination along with the use of a carbon heater which generates near-infrared to mid-infrared rays. The drying temperature is preferably ambient temperature to 80°C. At 100°C or higher, there is a risk of boiling of the solution, and above 80°C, there is a risk that the substrate will whiten or deform due to overheating.

By drying the coating agent, a coating film comprising PVA and having a barrier layer in which LDH is uniformly dispersed is formed on the surface of the resin container or the preform. The thickness of the barrier layer of the resin container is typically approximately 2 µm to approximately 8 µm.

A plastic bottle can be produced by stretch blow-molding the preform according to the present application. Thus, yet another aspect of the present invention provides a method for the production of a plastic bottle obtained by blow-molding the preform for a plastic bottle according to the present invention.

### EXAMPLES

### Example 1: Preparation of Coating Solution (without alcohol addition)

447.5 g of pure water was weighed in a large glass vessel, and 2.5 g of Mg acetate LDH (T-HT A610, Tayca) powder was added thereto to obtain a solution. The solution was stirred with a stirrer at 300 rpm for 30 minutes to completely dissolve the LDH.

50 g of PVA (Exceval™ 390, Kuraray) powder was weighed and added to the LDH solution produced as described above. A constant temperature bath was prepared, hot water was added thereto, and the setting temperature of the heater was set to 95°C. The LDH solution obtained as described above was stirred with a stirrer at 300 rpm in the constant temperature bath. After confirming that the water temperature had reached 95°C, the mixture was stirred for 1 hour. If there was undissolved PVA, the speed of the stirrer was increased appropriately and the mixture was stirred until the solution became completely transparent. The heater was turned off, the temperature of the solution was gradually lowered while stirring at 300 rpm, and stirring was continued until the temperature dropped to ambient temperature (23°C).

The weights and concentrations of each of the components in the coating solution produced as described above are as follows.

| | Weight (g) | Concentration (wt%) | Relative Concentration (wt%) |
|---|---|---|---|
| PVA | 50 | 10.05 | |
| LDH | 2.5 | 0.556 | 5 (with respect to PVA) |
| Water | 447.5 | | |
| Total | 500 | | |

### Example 2: Preparation of Coating Solution (with alcohol addition)

397.5 g of pure water was weighed in a large glass vessel, and 2.5 g of Mg acetate LDH (T-HT A610, Tayca) powder was added thereto to obtain a solution. The solution was stirred with a stirrer at 300 rpm for 30 minutes to completely dissolve the LDH.

50 g of PVA (Exceval™ 390, Kuraray) powder was weighed and added to the LDH solution produced as described above. A constant temperature bath was prepared, hot water was added thereto, and the setting temperature of the heater was set to 95°C. The LDH solution obtained as described above was stirred with a stirrer at 300 rpm in the constant temperature bath. After confirming that the water temperature had reached 95°C, the mixture was stirred for 1 hour. If there was undissolved PVA, the speed of the stirrer was increased appropriately and the mixture was stirred until the solution became completely transparent. The heater was turned off, the temperature of the solution was gradually lowered while stirring at 300 rpm, and stirring was continued until the temperature dropped to ambient temperature (23°C).

50 g of pure water and 50 g of IPA (Wako Pure Chemical) were added to a vessel different from the one described above, and after lightly stirring by hand to mix, the total amount thereof was added to the mixed solution obtained as described above. The mixture was stirred at 300 rpm for 30 minutes at ambient temperature.

The weights and concentrations of each of the components in the coating solution produced as described above are as follows.

| | Weight (g) | Concentration (wt%) | Relative Concentration (wt%) |
|---|---|---|---|
| PVA | 50 | 10.05 | |
| LDH | 2.5 | 0.556 | 5 (with respect to PVA) |
| Water | 422.5 | | |
| IPA | 25 | | 5 (with respect to water) |
| Total | 500 | | |

### Example 3: Evaluation of Barrier Properties with respect to LDH Concentration

The outer surfaces of preforms (24 g) for a 500 ml PET bottle were irradiated with plasma for approximately 3 seconds using an atmospheric plasma irradiation surface modifier (PS-1200AW, produced by Wedge, Co.), and they were subsequently heated to 50°C in an oven. Thereafter, the PVA concentrations were fixed at 13% using the same method as Example 1 while the preforms were maintained at 50°C, and the preforms were dipped once or twice in the respective produced coating solutions (PVA 13% and LDH 0%; PVA 13% and LDH 3%, PVA 13% and LDH 5%; and PVA 13% and LDH 7%) and dried in a 50°C oven for approximately 1 hour. The preforms having coating films of the respective coating solutions were stretch blow-molded under conventional conditions in a stretch blow-molding machine to produce PET bottles.

The oxygen permeabilities of the PET bottles were measured with a MOCON oxygen permeability measurement device (OXTRAN-2/61 manufactured by MOCON).

**Table 1**

| | | | | | Oxygen Permeability [cc/pkg·day] | | |
|---|---|---|---|---|---|---|---|
| | Dipping Repetitions | Application Amount [mg] | Individual Application Amounts [mg] | | 23°C | 30°C | 37°C |
| | | | | | 50% | 70% | 70% |
| Control (no application) | - | - | - | | 0.049 | 0.063 | 0.08 |
| PVA 13% LDH 0% | 1x | 75 | PVA | 75.0 | 0.014 | 0.038 | 0.053 |
| | | | LDH | 0.0 | | | |
| | 2x | 181.2 | PVA | 181.2 | 0.010 | 0.027 | 0.04 |
| | | | LDH | 0.0 | | | |
| PVA 13% LDH 3% | 1x | 88.3 | PVA | 85.7 | 0.011 | 0.032 | 0.046 |
| | | | L DH | 2.6 | | | |
| | 2x | 244.6 | PVA | 237.3 | 0.007 | 0.02 | 0.029 |
| | | | LDH | 7.3 | | | |
| PVA 13% LDH 5% | 1x | 101.9 | PVA | 96.8 | 0.008 | 0.025 | 0.036 |
| | | | LDH | 5.1 | | | |
| | 2x | 309.3 | PVA | 293.8 | 0.005 | 0.016 | 0.020 |
| | | | LDH | 15.5 | | | |
| PVA 13% LDH 7% | 1x | 130.9 | PVA | 121.7 | 0.004 | 0.021 | 0.028 |
| | | | L DH | 9.2 | | | |
| | 2x | 469.1 | PVA | 436.3 | 0.005 | 0.012 | 0.016 |
| | | | LDH | 32.8 | | | |

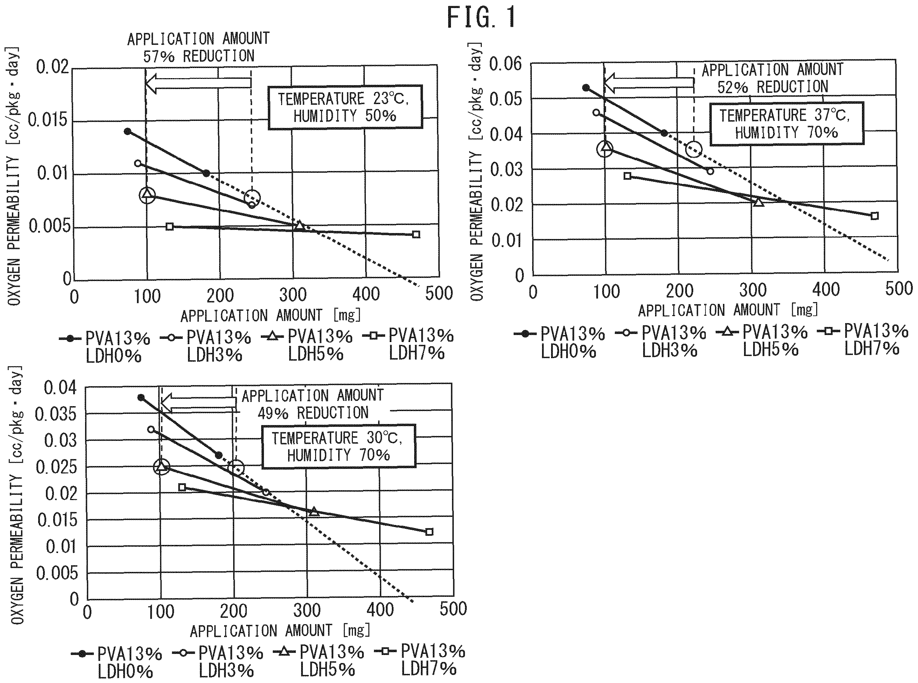

As shown in Table 1 and FIG. 1, it was found that the coating amount can be reduced by approximately 50% by adding 5% of LDH. The drying time can be reduced by nearly half. If the LDH is less than 3%, the barrier effect is low, while an LDH exceeding 7% is over specification, and there is a concern that the viscosity of the solution may increase. Thus, 5% of LDH was set as a standard addition amount.

### Example 4: Evaluation of Barrier Properties with respect to PVA Concentration

The outer surfaces of preforms (24 g) for a 500 ml PET bottle were irradiated with plasma for approximately 3 seconds using an atmospheric plasma irradiation surface modifier (PS-1200AW, produced by Wedge, Co.), and were subsequently heated to 50°C in an oven. Thereafter, the LDH concentrations were fixed at 5% using the same method as Example 1 while the preforms were maintained at 50°C, and the preforms were dipped once or twice in the respective produced coating solutions (PVA 8% and LDH 5%; PVA 10% and LDH 5%, PVA 11.5% and LDH 5%; and PVA 13% and LDH 5%) and dried in a 50°C oven for 1 hour. The preforms having coating films of the respective coating solutions were stretch blow-molded under conventional conditions in a stretch blow-molding machine to produce PET bottles.

The oxygen permeabilities of the PET bottles were measured with a MOCON oxygen permeability measurement device (OXTRAN-2/61 manufactured by MOCON).

**Table 2**

| | | | | | Oxygen Permeability [cc/pkg·day] | | |
|---|---|---|---|---|---|---|---|
| | Dipping Repetitions | Application Amount [mg] | Individual Application Amounts [mg] | | 23 °C | 30 °C | 37 °C |
| | | | | | 50% | 70% | 70% |
| PVA 8% LDH 5% | 1x | 37.2 | PVA | 35.3 | 0.019 | 0.038 | 0.06 |
| | | | LDH | 1.9 | | | |
| | 2x | 93.9 | PVA | 89.2 | 0.010 | 0.022 | 0.039 |
| | | | LDH | 4.7 | | | |
| PVA 10% LDH 5% | 1x | 54.9 | PVA | 52.2 | 0.011 | 0.028 | 0.048 |
| | | | LDH | 2.7 | | | |
| | 2x | 144.2 | PVA | 137.0 | 0.006 | 0.015 | 0.03 |
| | | | LDH | 7.2 | | | |
| PVA 11.5% LDH 5% | 1x | 75.6 | PVA | 71.8 | 0.01 | 0.025 | 0.044 |
| | | | LDH | 3.8 | | | |
| | 2x | 196.4 | PVA | 186.6 | 0.006 | 0.015 | 0.026 |
| | | | LDH | 9.8 | | | |
| PVA 13% LDH 5% | 1x | 101.9 | PVA | 96.8 | 0.008 | 0.025 | 0.036 |
| | | | LDH | 5.1 | | | |
| | 2x | 309.3 | PVA | 293.8 | 0.005 | 0.016 | 0.020 |
| | | | LDH | 15.5 | | | |

As shown in Table 2, as PVA concentration increased, the coating amount per dip increased, whereby the barrier properties also tended to increase proportionally. Considering the cost-effective barrier improvement effect and ease of handling, a PVA concentration of 10% is considered to be the optimum concentration.

### Example 5: Evaluation of Viscosity-Suppressing Effect of Alcohol

Coating Solutions (PVA 13% and LDH 5%; PVA 13%, LDH 5%, and IPA 5%; and PVA 13%, LDH 5%, and ethanol 5%) were produced using the same methods as in Examples 1 and 2, and the changes in viscosity thereof over time were examined.

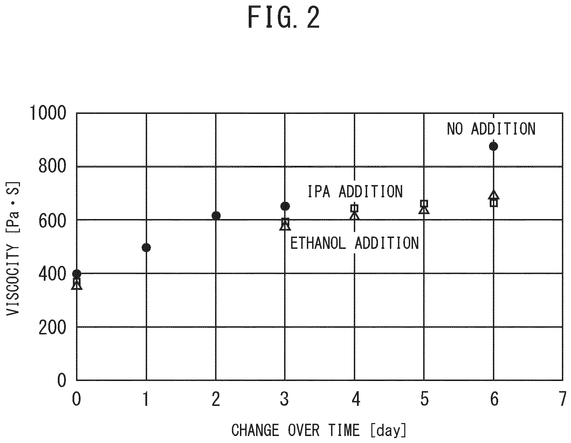

As can be understood from FIG. 2, though the viscosity of the solution to which only PVA and LDH were added increased over time, it was found that the increase in the viscosity of the solution could be suppressed by adding alcohol thereto. The effect of suppressing viscosity was greater with IPA than with ethanol.

### Example 6: FIB-SIM Observation

A preform (24 g) for a 500 ml PET bottle was dipped twice in the coating solution described in Example 1 and dried. The vicinity of the center of the PET bottle obtained by blow-molding the preform was cut with an FIB processing device (SM12050, manufactured by Seiko Instruments Corp.), and the image was observed by FIB-SIM.

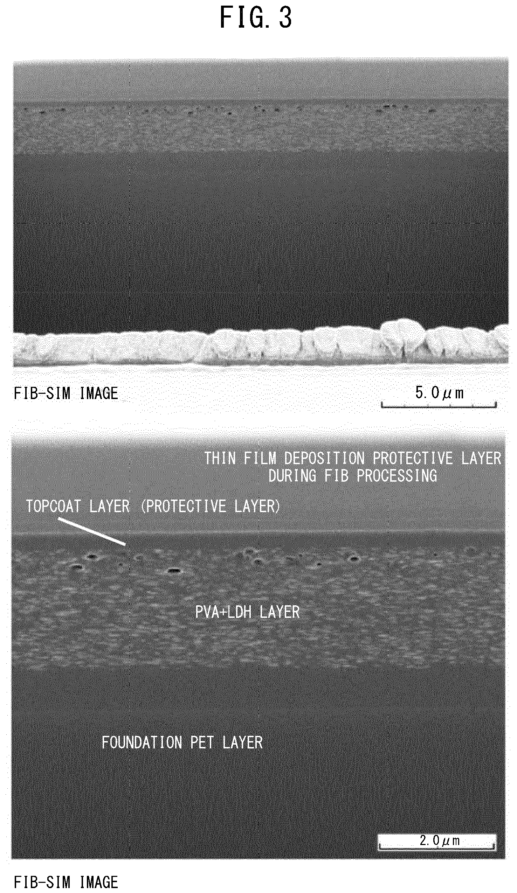

As shown in FIG. 3, it was observed that nanometer-scale LDH was uniformly dispersed in the barrier layer.

### Example 7: TEM Observation

A preform (24 g) for a 500 ml PET bottle was dipped twice in the coating solution described in Example 1 and dried. An image of the vicinity of the center of the PET bottle obtained by blow-molding the preform was observed with a TEM device (JEM-2200FS, manufactured by Nippon Raishi).

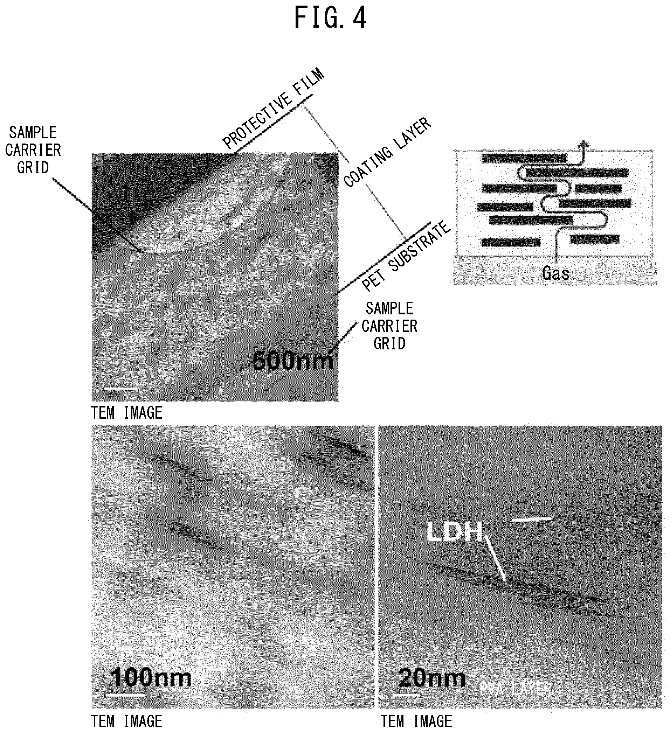

As shown in FIG. 4, it was observed that rod-shaped LDH having a large aspect ratio was dispersed in the PVA in the same direction. It is presumed that such a structure causes a labyrinth effect, which improves barrier properties.

## Claims

1. A coating agent for forming a coating film having barrier properties and stretchability, comprising polyvinyl alcohol (PVA) and a layered double hydroxide (LDH).

2. Coating agent according to claim 1, wherein approximately 3 wt% to approximately 7 wt% of LDH, with respect to the PVA, is contained in the coating agent.

3. Coating agent according to claim 1 or 2, wherein the LDH is a magnesium acetate Mg-Al LDH.

4. Coating agent according to any one of claims 1 to 3, wherein approximately 8 wt% to approximately 13 wt% of PVA, with respect to the total amount of the coating agent, is contained in the coating agent.

5. Coating agent according to any one of claims 1 to 4, further comprising an alcohol.

6. Coating agent according to claim 5, wherein the alcohol is isopropyl alcohol or ethanol.

7. A resin container comprising a coating film in which is formed a barrier layer comprising polyvinyl alcohol (PVA) and a layered double hydroxide (LDH).

8. Resin container according to claim 7 wherein approximately 3 wt% to approximately 7 wt% of LDH, with respect to the PVA, is contained in the barrier layer.

9. Resin container according to claim 7 or 8 wherein the LDH is a magnesium acetate Mg-Al LDH.

10. Resin container according to any one of claims 7 to 9 wherein approximately 8 wt% to approximately 13 wt% of PVA, with respect to the total amount of a coating agent, is contained in the barrier film.

11. Resin container according to any one of claims 7 to 10, further comprising an alcohol in the barrier layer.

12. Resin container according to claim 11 wherein the alcohol is isopropyl alcohol or ethanol.

13. Resin container according to any one of claims 7 to 12, wherein the resin container is a plastic bottle.

14. A preform for a plastic bottle consisting of a mouth serving as an opening of the plastic bottle, a cylindrical body, and a bottom closing off the cylindrical body, wherein the preform comprises a coating film in which is formed a barrier layer container polyvinyl alcohol (PVA) and a layered double hydroxide (LDH).

15. Preform according to claim 14 wherein approximately 3 wt% to approximately 7 wt% of LDH, with respect to the PVA, is contained in the barrier layer.

16. Preform according to claim 14 or 15 wherein the LDH is a magnesium acetate Mg-Al LDH.

17. Preform according to any one of claims 14 to 16 wherein approximately 8 wt% to approximately 13 wt% of PVA, with respect to the total amount of a coating agent, is contained in the barrier film.

18. Preform according to any one of claims 14 to 17, further comprising an alcohol in the barrier layer.

19. Preform according to claim 18 wherein the alcohol is isopropyl alcohol or ethanol.

20. A method for the production of a preform for a plastic bottle, comprising the steps of:
preparing a preform, consisting of a mouth serving as an opening of the plastic bottle, a cylindrical body, and a bottom closing off the cylindrical body, and
coating an outer surface of the preform with a coating agent according to any one of claims 1 to 6 and drying to form a barrier layer.

21. A method for the production of a plastic bottle, comprising blow-molding a preform for a plastic bottle produced by a method according to claim 20.
